# EUROPÄISCHE PATENTSCHRIFT

(11) **EP 2 200 804 B1**
(45) Veröffentlichungstag und Bekanntmachung des Hinweises auf die Patenterteilung: **24.12.2014**
(21) Anmeldenummer: 08759078.2
(22) Anmeldetag: 06.06.2008
(51) Int. Cl.: B29C 47/12

(54) **VORRICHTUNG ZUM HERSTELLEN VON THERMOPLASTISCHEN WELLROHREN**
DEVICE FOR PRODUCING THERMOPLASTIC CORRUGATED PIPES
DISPOSITIF POUR FABRIQUER DES TUBES ONDULÉS THERMOPLASTIQUES

(30) Priorität: 12.10.2007 DE 102007049653
(43) Veröffentlichungstag der Anmeldung: 30.06.2010
(73) Patentinhaber: UNICOR GmbH, 97437 Hassfurt (DE)
(72) Erfinder: NEUBAUER, Gerhard, 97486 Königsberg (DE)
(74) Vertreter: Köhler, Walter
(86) Internationale Anmeldenummer: PCT/EP2008/004540
(87) Internationale Veröffentlichungsnummer: WO 2009/049690

(56) Entgegenhaltungen:
- EP-A- 1 279 486
- WO-A-99/17916
- WO-A-2004/037516
- US-A- 4 293 051
- US-A- 4 674 969
- US-A- 5 257 924
- US-A1- 2006 157 887

## Beschreibung

Die Erfindung betrifft eine Vorrichtung zum Herstellen von thermoplastischen Wellrohren, wobei die Vorrichtung eine Extrusionseinrichtung mit Extrudereinrichtung und Spritzdüseneinrichtung und eine Korrugatoreinrichtung mit wandernden Formbacken aufweist und die Extrusionseinrichtung und die Korrugatoreinrichtung zueinander z. B. zum Justieren, positionsverstellbar sind.

Bekannte derartige Vorrichtungen mit horizontaler Produktionsrichtung (X-Richtung) sehen vor, daß der Korrugator in Produktionsrichtung verfahrbar ist und zwar einerseits zum Justieren in X-Richtung und andererseits um bei Betriebsausfall und zum Werkzeugwechsel den Korrugator von der Extrusionseinrichtung wegzufahren. Zur Justierung in Y-Richtung, d. h. quer zur Produktionsrichtung und zum Justieren in vertikaler Richtung (Z-Richtung) weisen die herkömmlichen Extrusionseinrichtungen entsprechende Y- und Z-Justiereinrichtungen auf.

Mit dem Verfahren der Korrugatoreinrichtung beim Justieren und insbesondere beim Wegfahren des Korrugators im Betriebsausfall und zum Werkzeugwechsel, ergeben sich Relativverschiebungen zu den der Korrugatoreinrichtung nachgeschalteten periphären Einrichtungen, wie nachgeschalteten Schneid- und Transporteinrichtungen. Bei den herkömmlichen Anlagen sind diese nachgeschalteten periphären Einrichtungen daher meist in Art einer Ziehharmonika-Anbindung angeschlossen, woraus sich jedoch apparative und anordnungsmäßige Nachteile ergeben. Die Nachteile sind besonders erheblich bei Ausführungen zur Herstellung von Wellrohren mit großen Nennweiten, da dann die Komponenten der Anlagen relativ voluminös und schwergewichtig sind.

Aus dem US-Patent 5,257,924 A ist eine Vorrichtung zur Herstellung von thermoplastischen Weitrohren bekannt. Die Vorrichtung umfasst eine Extrusionseinrichtung mit einem Extruder und eine Korrugatoreinrichtung mit wandernden Formbacken. Die Extrusionseinrichtung und die Korrugatoreinrichtung sind zueinander zum Justieren positionsverstellbar.

Aus der EP 1 279 486 A2 ist eine Vorrichtung zum extrudieren eines unvulkanisierten Gummigegenstandes mit konstantem Querschnitt und konstantem Volumen bekannt. Die Vorrichtung weist ein auf Schienen gelagertes Bodengestell zur Positionierung der Vorrichtung auf.

Aus dem US-Patent 4,674,969 A ist eine Extrusionseinrichtung bekannt, die auf einem höhenverstellbaren Bodengestell angeordnet ist. Die Extrusionseinrichtung kann mittels auf dem Bodengestell befestigten Schienen horizontal positioniert werden.

Der Erfindung liegt die Aufgabe zugrunde, eine Vorrichtung der eingangs genannten Art zu schaffen, die vom Aufbau her so konzipiert ist, daß auch Ausführungen für die Herstellung von Wellrohren großer Nennweiten konstruktiv einfach realisiert werden können.

Diese Aufgabe löst die Erfindung mit dem Gegenstand des Patentanspruchs 1. Es ist von besonderem Vorteil, wenn die Produktionsrichtung in X-Richtung angeordnet ist. Die Verfahrbarkeit der Extrustionseinrichtung in X-Richtung kann dann nämlich so ausgebildet sein, daß einerseits die Justierung in X-Richtung und andererseits auch das Wegverfahren der Extrusionseinrichtung von der Korrugatoreinrichtung in X-Richtung realisierbar ist, wenn ein Betriebsausfall eintritt oder ein Werkzeugwechsel durchgeführt werden soll. Bevorzugterweise wird die Korrugatoreinrichtung in vertikaler Richtung postionsverstellbar ausgeführt, um die Justierung in vertikaler Richtung durch Verfahren der Korrugatoreinrichtung in vertikaler Richtung zu realisieren.

Bei bevorzugten Ausführungen ist vorgesehen, daß die Korrugatoreinrichtung ausschließlich in vertikaler Richtung positionsverstellbar bewegbar ist und also in X-Richtung und in Y-Richtung nicht positionsverstellbar ist. Bei abgewandelten Ausführungen kann allerdings die Korrugatoreinrichtung auch zusätzlich in eine der beiden anderen Richtungen positionsverstellbar sein. Ferner sind Ausführungen denkbar, bei denen die Extrusionseinrichtung in X-, Y- und Z-Richtung positionsverstellbar ist.

Bei der Justierung können sich die an der Extrusionseinrichtung und die an der Korrugatoreinrichtung vorhandenen Justiereinrichtungen mit identischer Richtung im Verfahrweg ergänzen, wodurch sich konstruktive Vereinfachungen der einzelnen Justiereinrichtungen und Handhabungsvorteile bei der Justierung ergeben können.

Weitere Merkmale und Vorteile der Erfindung ergeben sich aus der nachfolgenden Beschreibung eines Ausführungsbeispiels anhand der Figuren.

Dabei zeigen
- Figur 1: eine perspektivische Ansicht eines Ausführungsbeispiels der Vorrichtung zur Herstellung thermoplastischer Wellrohre mit einer Extrusionseinrichtung und einer Korrugatoreinrichtung, Sicht schräg von oben,

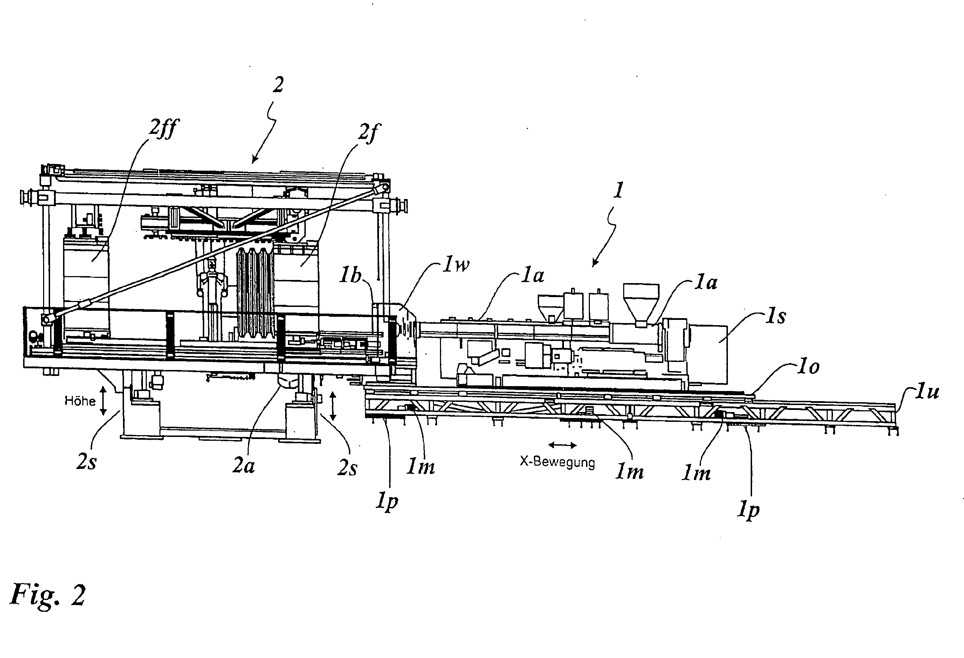

- Figur 2: eine Seitenansicht des Ausführungsbeispiels in Figur 1;

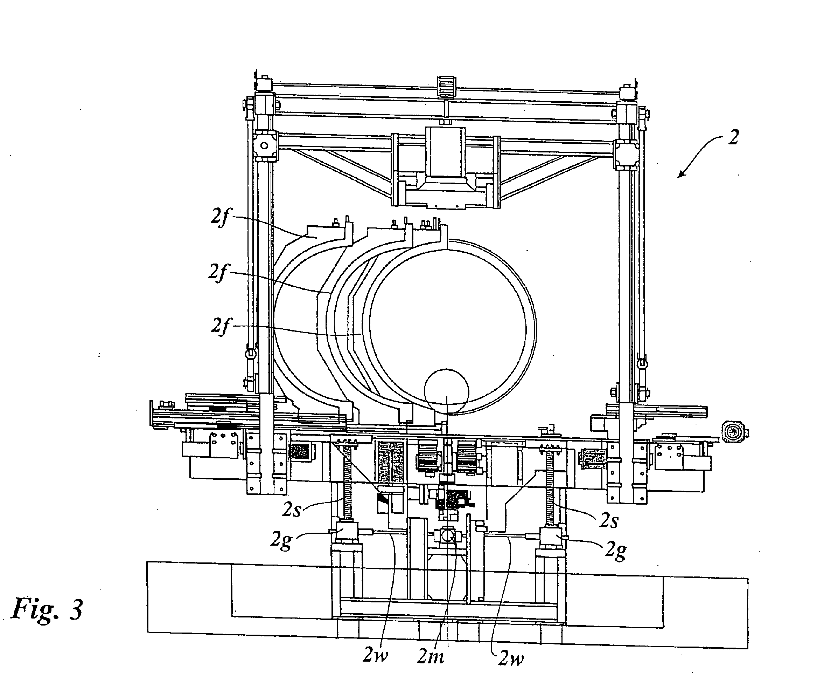

- Figur 3: eine Stirnschnittansicht der Korrugatoreinrichtung des Ausführungsbeispiels in Figur 1.

Die in den Figuren dargestellte Vorrichtung weist als Hauptkomponenten eine Extrusionseinrichtung 1 und eine Korrugatoreinrichtung 2 auf. Die Extrusionseinrichtung 1 setzt sich im dargestellten Fall aus zwei Extrudern 1a und einer gemeinsamen Düseneinrichtung 1 b zusammen. Die Extrusionseinrichtung 1 weist ein Gestell 1o auf, auf dem die zwei Extrudereinrichtungen 1a und die gemeinsame Düseneinrichtung 1 b installiert sind. Die gemeinsame Düseneinrichtung 1b ist auf einem auf dem Gestell 1o fest installierten Winkelständer 1 w auswechselbar gelagert. Die Extruder 1a sind auf Schienen auf dem Gestell 1o längs zur Produktionsrichtung über Rollen verschiebbar gelagert. Die Extrudereinrichtungen 1a sind mit der Düseneinrichtung 1b über flexible Leitungen 1 f verbunden. Zusätzlich ist auf dem Gestell 1o ein Schaltschrank 1 s angeordnet.

Das Gestell 1o mit den darauf angeordneten Komponenten 1 a und 1 b ist auf einem unteren Bodengestell 1 u gelagert. Auf dem unteren Bodengestell 1 u ist eine in X-Richtung verlaufende lineare Schieneneinrichtung 1x angeordnet, in der das obere Gestell 1o über eine Kugellagerführung in X-Richtung linear verschiebbar ist. Diese Schiebeführung in X-Richtung erlaubt es, bei Betriebsausfall oder im Falle eines Werkzeugwechsels die Extrusionseinrichtungen mit den Extrudern 1a mitsamt der Düseneinrichtung 1b um ca. 3 m von der Korrugatoreinrichtung 2 weg zu verschieben. Ferner erlaubt die Schiebeführung, daß die Extrudereinrichtung im Rahmen der Justierung auf dem Gestell 1o angeordnete Einrichtung in X-Richtung bewegt wird.

Das Bodengestell 1u ist auf ortsfest installierten Bodenplatten 1p in Y-Richtung, d. h. quer zur X-Richtung verfahrbar. Hierfür sind auf den Bodenplatten 1p in Y-Richtung verlaufende Schieneneinrichtungen 1Y angeordnet, in denen das untere Bodengestell 1u über Rollen verschiebbar ist. Diese Schiebeführung in Y-Richtung erlaubt es im Rahmen der Justierung, die Extrusionseinrichtung in Y-Richtung zu bewegen.

Zum Antrieb der Bewegung in X-Richtung sind Hydraulikantriebe mit hydraulischen Druckzylindern vorgesehen. Sie sind auf dem unteren Bodengestell 1u gelagert und wirken auf das obere Gestell 1o ein. Für den Notfall ist ein Druckspeicher vorgesehen, der sicherstellt, daß auch bei Stromausfall die Extrusionseinrichtung über den Hydraulikantrieb vom Korrugator ausreichend weit weg verfahren wird. Bei ausgeschalteten Hydraulikantrieben ist aufgrund der Selbsterhemmung der Hydraulikantriebe das Gestell 1o festgestellt. Über die Ausschaltung der Hydraulikantriebe kann somit das Gestell 1 o und damit die Extrusionseinrichtung 1 im Rahmen der Justierung in X-Richtung in wählbarer Position auf dem Bodengestell 1 u festgestellt werden.

Zum Antrieb für die Bewegung in Y-Richtung sind elektrische Getriebemotoren vorgesehen, die jeweils über Kardanwelle-Stößel antreiben. In dem dargestellten Fall sind drei solcher Getriebemotoren 1m vorgesehen. Die Getriebemotoren 1m sind auf den ortsfesten Bodenplatten 1 p gelagert. Die angetriebenen Stößel sind in Getriebekästen auf den Bodenplatten gelagert und wirken auf das Bodengestell 1 u im Sinne eines Antriebs in Y-Richtung bei der Justierung ein. Bei ausgeschalteten Getriebemotoren 1 m ist das Bodengestell 1 u aufgrund der Selbsthemmung der Getriebe das Bodengestellt 1 u festgestellt. Über die Ausschaltung der Getriebemotoren kann somit das Bodengestell 1 u und damit die Extrusionseinrichtung 1 im Rahmen der Justierung in Y-Richtung in wählbarer Position auf den Bodenplatten 1 p festgestellt werden.

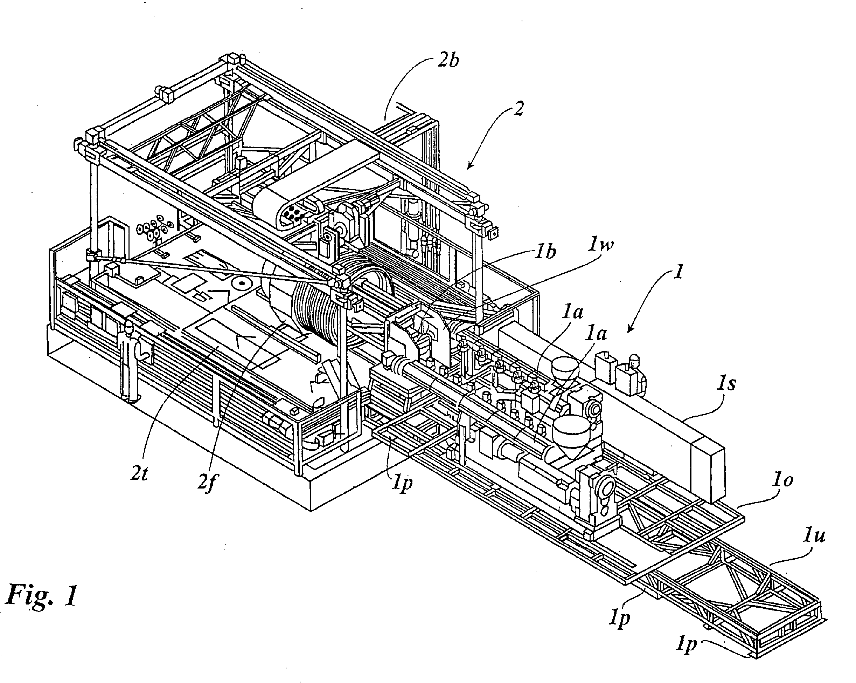

Die Korrugatoreinrichtung 2 umfaßt einen im dargestellten Fall horizontalen Maschinentisch 2t mit darauf geführten Formbacken 2f. In der Darstellung in Fig. 1 ist zur besseren Anschaulichkeit lediglich einer der Korrugatorformbacken 1f gezeigt. Die Formbacken 2f bilden jeweils paarweise einen Formhohlraum. Die Formbackenhälften werden auf dem Maschinentisch 2t in einer linearen Formstrecke 2s unter Ausbildung eines linearen Formkanals geführt. In dieser linearen Formstrecke sind die Formbackenpaare in einer Reihe hintereinander angeordnet geführt. Der Antrieb der Formbacken 2f in der Formstrecke 2s erfolgt über einen im Maschinentisch 2t angeordneten Antriebsmotor 2a mit Abtriebsritzel 2r. Das Abtriebsritzel 2r kämmt hierbei mit den bodenseitigen Zahnstangen der in der Formstrecke geführten Formbacken. Damit werden die Formbacken in der Formstrecke in X-Richtung von der Extrusionseinrichtung weg voranbewegt. Über Greifer 2g werden die Formbacken 2f vom Ende der Formstrecke 2s zum Anfang der Formstrecke rückgeführt. Der Anfang der Formstrecke 2s schließt unmittelbar an die Düseneinrichtung 1 b an. Die Düseneinrichtung kann hierbei in den Formkanal hineinragen, und zwar vorzugsweise soweit, dass das Düsenende aus dem der Kunststoffschmelzeschlauch aus der Düseneinrichtung austritt bereits in dem von den Korrugatorbacken umschlossenen Formhohlraum liegt. greift sie in den Kühldorn der Düseneinrichtung ein. Die Achse des Formkanals 2s ist linear fluchtend mit der Achse der Düseneinrichtung 1 b ausgerichtet und bildet die Achse der Produktionsrichtung X.

Die Korrugatoreinrichtung 2 arbeitet wie folgt:

Der aus der Düseneinrichtung 1 b austretende Kunststoffschmelzeschlauch durchläuft den Formkanal der in der Formstrecke hintereinander angeordneten Formbackenpaare. Der Schmelzeschlauch wird dabei gekühlt und geformt unter Ausbildung eines Wellrohrs. Am Ende des Formkanals tritt das fertig geformte Wellrohr als Endlosrohr aus.

Zur Formung und Kühlung im Formkanal weist die Korrugatoreinrichtung 2 an sich bekannte Vakuum- und Kühleinrichtungen auf. Diese sind im vorliegenden Fall im Einzelnen in den Figuren nicht dargestellt sind. Die Versorgung dieser Vakuum- und Kühleinrichtungen erfolgt im dargestellten Fall über ein oberhalb des Maschinentischs 2t angeordnete Versorgungsbrücke 2b.

Die Korrugatoreinrichtung 2 ist in vertikaler Richtung justierbar, indem die Position des Maschinentischs 2t in vertikaler Richtung über Schubspindeln verstellbar ist. Es sind 4 Schubspindeln 2s vorgesehen. Sie sind im Bereich der Ecken des im Grundriß rechtwinkligen Maschinentischs 2t angeordnet und zwar 2 Schubspindeln 2s vorne, d. h. im Bereich des Anfangs der Formstrecke, und 2 Schubspindeln 2s hinten, d. h. im Bereich des Endes der Formstrecke.

Die Schubspindeln 2s sind jeweils in einer in einem ortsfesten Lagerbock drehbar gelagerten Gewindespindel 2g axial in vertikaler Richtung verschiebbar gelagert. An ihrem oberen freien Ende greifen die Schubspindeln 2s jeweils an der Unterseite des Korrugatortischs 2t an.

Das vordere und das hintere Schubspindelpaar ist jeweils über einen vorderen bzw. einen hinteren Getriebemotor 2m angetrieben. Der Getriebemotor 2m treibt die beiden Schubspindeln 2s des jeweiligen Schubspindelpaares synchron über eine gemeinsame Abtriebswelle 2w an.

In dem dargestellten Fall handelt es sich um eine Vorrichtung zur Herstellung von Wellrohren großer Nennweite, d. h. im Nennweitenbereich von 600 bis 2400 mm, vorzugsweise für Nennweiten von 1800 mm. Wegen der zum Einsatz kommenden großen Formbacken 2f ist die Korrugatoreinrichtung 2 relativ voluminös und schwer. Es kommen üblicherweise 6 Formbackenpaare mit einem weiteren Muffenformbackenpaar auf dem Maschinentisch 2t zum Einsatz, sodaß das Gesamtgewicht der Korrugatoreinrichtung 2 in der Größenordnung von 60 t liegt. Es ist daher von wesentlichem Vorteil, wenn die Korrugatoreinrichtung 2 keine Justiereinrichtung mit in X- und/oder Y-Richtung aufweisen muß, sondern ausschließlich eine Justiereinrichtung in vertikaler Richtung aufweist, wie dies bei dem in den Figuren dargestellten Ausführungsbeispiel der Fall ist.

Die Justierung in X- und Y-Richtung erfolgt in dem dargestellten Fall über die betreffenden X bzw. Y-Justiereinrichtungen der Extrusionseinrichtung 1.

Ein wesentlicher Vorteil in diesem Zusammenhang ist, daß die Einstelleinrichtung in X-Richtung sowohl die Justierung in X-Richtung realisiert als auch die Verschiebebewegung der Extrusionseinrichtung 1 weg von der Korrugatoreinrichtung 2 erlaubt, wenn ein Betriebsausfall eintritt oder ein Werkzeugwechsel erfolgt. Für diesen Fall steht ein Verfahrweg von 3 m zur Verfügung.

Bei abgewandelten Ausführungsbeispielen kann die Extrusionseinrichtung 1 zusätzlich zu der Justiereinrichtung in X- und Y-Richtung auch eine Justiereinrichtung in vertikaler Richtung aufweisen. In einem solchen Fall kann dann die vertikale Justierung auch über die vertikale Verschiebung der Extrusionseinrichtung 2 erfolgen.

### Bezugszeichenliste

- 1: Extrusionseinrichtung
- 1a: Extruder
- 1b: Düseneinrichtung
- 1o: Gestell
- 1w: Winkelständer
- 1f: flexible Leitung
- 1s: Schaltschrank
- 1u: Bodengestell
- 1x: Schieneneinrichtung
- 1p: Bodenplatte
- 1x: Schieneneinrichtung
- 1m: Elektrischer Getriebemotor
- 2: Korrugatoreinrichtung
- 2t: Maschinentisch
- 2f: Formbacken
- 2ff: Muffenformbacken
- 2s: Lineare Formstrecke
- 2a: Antriebsmotor
- 2r: Abtriebsritzel
- 2g: Greifer
- 2b: Versorgungsbrücke
- 2s: Schubspindel
- 2g: Gewindemutter
- 2m: Getriebemotor
- 2w: Abtriebswelle

## Patentansprüche

1. Vorrichtung zum Herstellen von thermoplastischen Wellrohren, wobei die Vorrichtung zur Herstellung von Wellrohren von Nennweiten in einem Bereich von 600 - 2400 mm, vorzugsweise Nennweiten bei 1800 mm ausgelegt ist,
wobei die Vorrichtung eine Extrusionseinrichtung (1) mit Extruder (1a) und Spritzdüseneinrichtung (1b) und eine Korrugatoreinrichtung (2) mit wandernden Formbacken (1f) aufweist und die Extrusionseinrichtung und die Korrugatoreinrichtung (2) zueinander zum Justieren, positionsverstellbar sind,
wobei vorgesehen ist,
daß die Extrusionseinrichtung (1) in horizontaler Ebene relativ zur Korrugatoreinrichtung (2) positionsverstellbar ist
a) indem die Extrusionseinrichtung (1) in X-Richtung linear verfahrbar ist, wobei die X-Richtung parallel zur Produktionsrichtung und/oder Achse der Spritzdüseneinrichtung (1b) verläuft, d. h. fluchtend oder parallel versetzt zu dieser; und
b) indem die Extrusionseinrichtung (1) in Y-Richtung linear verfahrbar ist, wobei die Y-Richtung quer zur X-Richtung verläuft und wobei vorgesehen ist, dass
c) die Korrugatoreinrichtung (2) ausschließlich in vertikaler Richtung positionsverstellbar ist und also sowohl in X-Richtung als auch in Y-Richtung nicht positionsverstellbar ist, oder
d) die Korrugatoreinrichtung (2) ausschließlich in vertikaler Richtung und in Y-Richtung positionsverstellbar ist und also in X-Richtung nicht positionsverstellbar ist,
**dadurch gekennzeichnet,**
**daß** die Extrusionseinrichtung (1) ein Lagergestell (1o) aufweist, das auf einem Bodengestell (1u) abgestützt ist, wobei das Bodengestell (1u) auf einer vorzugsweise ortsfest angeordneten Schieneneinrichtung (1y) verfahrbar ist und das Lagergestell auf einer auf dem Bodengestell (1 u) angeordneten Schieneneinrichtung (1x) verfahrbar ist, und
**daß** die Extrudereinrichtung (1) zwei Extruder (1a) und eine gemeinsame Düseneinrichtung (1b) aufweist, und
**daß** die gemeinsame Düseneinrichtung (1b) auf einem auf dem Lagergestell (1o) fest installierten VNinkelständer (1w) auswechselbar gelagert ist und die Extruder (1a) auf Schienen auf dem Lagergestell (1o) längs zur Produktionsrichtung (x) verschiebbar gelagert sind.

2. Vorrichtung nach Anspruch 1,
**dadurch gekennzeichnet,**
**daß** das Bodengestell (1u) in Y-Richtung verfahrbar ist und das Lagergestell (1o) in X-Richtung verfahrbar ist.

3. Vorrichtung nach Anspruch 1,
**dadurch gekennzeichnet,**
**daß** das Bodengestell (1u) in X-Richtung verfahrbar ist und das Lagergestell (1o) in Y-Richtung verfahrbar ist.

4. Vorrichtung nach einem der vorangehenden Ansprüche,
**dadurch gekennzeichnet,**
**daß** die Extrusionseinrichtung (1) und/oder die Korrugatoreinrichtung (2) in X-Richtung jeweils über einen manuellen oder motorischen Antrieb bewegbar sind bzw. ist.

5. Vorrichtung nach Anspruch 4,
**dadurch gekennzeichnet,**
**daß** der motorische Antrieb in X-Richtung als Hydraulikantrieb, vorzugsweise mit Druckspeicher für eine Notbetätigung ausgebildet ist.

6. Vorrichtung nach einem der vorangehenden Ansprüche,
**dadurch gekennzeichnet,**
**daß** die Extrusionseinrichtung (1) und/oder die Korrugatoreinrichtung (2) in Y-Richtung jeweils über einen manuellen oder motorischen Antrieb bewegbar sind bzw. ist.

7. Vorrichtung nach einem der vorangehenden Ansprüche,
**dadurch gekennzeichnet,**
**daß** die Extrusionseinrichtung (1) und/oder die Korrugatoreinrichtung (2) in vertikaler Einrichtung jeweils über einen manuellen oder motorischen Antrieb bewegbar sind bzw. ist.

## Claims

1. Device for the production of thermoplastic corrugated pipes, wherein the device for the production of corrugated pipes is designed from nominal widths in a range of 600 to 2400mm, preferably nominal widths of 1800mm,
wherein the device has an extrusion device (1) having an extruder (1a) and injection nozzle device (1b), and a corrugator device (2) having erratic mould blocks (If), and the extrusion device and the corrugator device (2) can have their positions adjusted with respect to each other for the purpose of adjustment,
wherein provision is made,
for the extrusion device (1) to be able to have its position adjusted in the horizontal plane relative to the corrugator device (2)
a) by the extrusion device (1) being able to move linearly in the X direction, wherein the X direction runs parallel to the production direction and/or axis of the injection nozzle device (1b), i.e. in alignment with or displaced parallel thereto; and
b) by the extrusion device (1) being able to move linearly in the Y direction, wherein the Y direction runs transverse to the X direction and where provision is made for
c) the corrugator device (2) to be able to have its position adjusted solely in the vertical direction and therefore to be able to have its position adjusted in neither the X direction nor in the Y direction, or
d) the corrugator device (2) to be able to have its position adjusted solely in the vertical direction and in the Y direction and therefore to not be able to have its position adjusted in the X direction,
**characterised in that**,
the extrusion device (1) has a storage rack (1o), which is supported on a floor rack (1u), wherein the floor rack (1u) can be moved on a preferably immovably arranged rail device (1y) and the storage rack can be moved on a rail device (1x) arranged on the floor rack (1u), and
the extrusion device (1) has two extruders (1a) and a mutual nozzle device (1b), and
the mutual nozzle device (1b) is assembled exchangeably on a corner stand (1w) which is fixedly installed on the storage rack (1o) and the extruders (1a) are assembled displaceably on rails on the storage rack (1o) lengthwise with respect to the production direction (x).

2. Device according to claim 1,
**characterised in that**,
the floor rack (1u) can be moved in the Y direction and the storage rack (1o) can be moved in the X direction.

3. Device according to claim 1,
**characterised in that**,
the floor rack (1u) can be moved in the X direction and the storage rack (1o) can be moved in the Y direction.

4. Device according to one of the preceding claims,
**characterised in that**,
the extrusion device (1) and/or the corrugator device (2) can each be moved in the X direction by a manual or motorised drive.

5. Device according to claim 4,
**characterised in that**,
the motorised drive is formed in the X direction as an hydraulic drive, preferably having pressure accumulators for an emergency operation.

6. Device according to one of the preceding claims,
**characterised in that**,
the extrusion device (1) and/or the corrugator device (2) can each be moved in the Y direction by a manual or motorised drive.

7. Device according to one of the preceding claims,
**characterised in that**,
the extrusion device (1) and/or the corrugator device (2) can each be moved in the vertical direction by a manual or motorised drive.

## Revendications

1. Dispositif pour la fabrication de tubes ondulés thermoplastiques, ce dispositif de fabrication de tubes ondulés étant conçu pour la réalisation de diamètres nominaux de l'ordre de 600 à 2400 mm, de préférence des diamètres nominaux de 1800 mm,
le dispositif de fabrication comprenant un dispositif d'extrusion (1) avec une extrudeuse (1a) et un dispositif à buse de pulvérisation (1b) et un dispositif corrugateur (2) avec des mâchoires de formes chauffantes (1f) et le dispositif d'extrusion ainsi que le dispositif corrugateur (2) étant réglables en position l'un par rapport à l'autre pour l'ajustement,
il est prévu que
que le dispositif d'extrusion (1) étant réglable en position dans un plan horizontal par rapport au dispositif corrugateur (2)
a) du fait que le dispositif d'extrusion (1) est mobile de manière linéaire dans la direction X, la direction X étant parallèle à la direction de production et/ou à l'axe du dispositif à buse de pulvérisation (1b), c'est-à-dire alignée ou décalée de manière parallèle à celui-ci ; et
b) du fait que le dispositif d'extrusion (1) est mobile de manière linéaire dans la direction Y, la direction Y étant transversale par rapport à la direction X et il est prévu que
c) le dispositif corrugateur (2) est réglable en position exclusivement dans la direction verticale et donc pas réglable en position dans la direction X aussi bien que dans la direction Y, ou
d) le dispositif corrugateur (2) est réglable en position exclusivement dans la direction verticale et dans la direction Y et donc pas réglable en position dans la direction X,
**caractérisé en ce que**
le dispositif d'extrusion (1) comprend un bâti de support (1o) qui s'appuie sur un bâti de fond (1 u), le bâti de fondation (1 u) étant mobile sur un dispositif à rails (1 y) de préférence stationnaire et le bâti de support étant mobile sur un dispositif à rails (1x) disposé sur le bâti de fondation (1 u), et
le dispositif d'extrusion (1) comprend deux extrudeuses (1a) et un dispositif à buses commun (1 b), et
le dispositif à buses commun (1b) est logé de manière amovible sur un support angulaire (1w) installé de manière fixe sur le bâti de support (1o) et les extrudeuses (1 a) sont logées de manière coulissante sur des rails sur le bâti de support (1o) longitudinalement par rapport à la direction de production (x).

2. Dispositif selon la revendication 1, **caractérisé en ce que** le bâti de fondation (1u) est mobile dans la direction Y et le bâti de support (1o) est mobile dans la direction X.

3. Dispositif selon la revendication 1, **caractérisé en ce que** le bâti de fondation (1u) est mobile dans la direction X et le bâti de support (1o) est mobile dans la direction Y.

4. Dispositif selon l'une des revendications précédentes, **caractérisé en ce que** le dispositif d'extrusion (1) et/ou le dispositif corrugateur (2) sont mobiles dans la direction X à l'aide d'un dispositif d'entraînement manuel ou motorisé.

5. Dispositif selon la revendication 4, **caractérisé en ce que** le dispositif d'entraînement motorisé est conçu dans la direction X comme un entraînement hydraulique, de préférence avec un réservoir de pression pour un actionnement d'urgence.

6. Dispositif selon l'une des revendications précédentes, **caractérisé en ce que** le dispositif d'extrusion (1) et/ou le dispositif corrugateur (2) sont mobiles dans la direction Y à l'aide d'un dispositif d'entraînement manuel ou motorisé.

7. Dispositif selon l'une des revendications précédentes, **caractérisé en ce que** le dispositif d'extrusion (1) et/ou le dispositif corrugateur (2) sont mobiles dans la direction verticale à l'aide d'un dispositif d'entraînement manuel ou motorisé.
